# EUROPEAN PATENT SPECIFICATION

(11) **EP 3 277 556 B1**
(45) Date of publication and mention of the grant of the patent: **04.09.2019**
(21) Application number: 16702671.5
(22) Date of filing: 13.01.2016
(51) Int. Cl.: B62D 5/04

(54) **STRETCHED MOTOR VEHICLES**
LANGGESTRECKTE KRAFTFAHRZEUGE
VÉHICULES À MOTEUR ALLONGÉS

(30) Priority: 13.01.2015 GB 201500516
(43) Date of publication of application: 07.02.2018
(73) Proprietor: Eagle Specialist Vehicles Limited, Hindley Green, Wigan WN2 4EY (GB)
(72) Inventor: MEES, Michael, Macclesfield Cheshire SK10 2UA (GB)
(74) Representative: Coles, Graham Frederick
(86) International application number: PCT/EP2016/050586
(87) International publication number: WO 2016/113319

(56) References cited:
- DE-A1-102008 055 900

## Description

This invention relates to methods of adapting to structural changes of motor vehicles, and to so-called stretched motor vehicles resulting from such changes.

Commercially manufactured and marketed motor vehicles, commonly referred to as 'production motor vehicles', are in some circumstances individually adapted structurally to enable them to be used for purposes and capabilities beyond those for which they were manufactured and originally intended. More especially, production motor vehicles are commonly modified in this way by 'stretching' them, that is to say, by lengthening the wheelbase of the motor vehicle and adding or modifying coachwork of the motor vehicle for greater load-carrying capacity.

The increase in length and consequential increase in operational weight of the motor vehicle, changes its dynamics, and affects operation of the stability-control system within the existing electronic control and instrumentation installation of the production motor vehicle. The stability-control system receives input signals *inter alia* from yaw, pitch, speed, lateral acceleration and steering-angle sensors, and is operative in the production motor vehicle to override the driver's instructions and give warnings if the motor vehicle departs from a defined operational envelope. The change in dynamics resulting from the stretching, leads to malfunctioning of the stability-control system, with possibly dangerous consequences.

It is known from DE 10 2008 055900 that when making changes to motor vehicles it is often necessary or desirable to change the turning circle of the vehicle, and that reduction of the turning circle can be achieved advantageously by electronic adjustment of its maximum steering angle.

It is an object of the present invention to provide a method of combatting the malfunctioning of the installed stability-control system of a motor vehicle following stretching. The present invention is based on the recognition that the malfunctioning of the stability-control system of the production motor vehicle can be overcome to a significant extent in the stretched motor vehicle by modification of the steering-angle as signalled to the stability-control system.

According to one aspect of the present invention a method of adapting the operation of the stability-control system of a motor vehicle to function appropriately is characterised in that the method operative in the motor vehicle when stretched, comprises the steps of modifying the steering-angle of the vehicle as this is signalled to the stability-control system, the modification being a reduction of the signalled steering-angle relative to the actual steering angle according to comparison between the steering angle required respectively of the motor vehicle before stretching and of the stretched motor vehicle, or of typically-equivalent versions of one or both of such vehicles, in execution of the same turning manoeuvres as one another.

According to another aspect of the present invention there is provided a motor vehicle that has been stretched, characterised in that the stretched motor vehicle includes the stability-control system of the motor vehicle before it was stretched, and is adapted to modify the steering-angle signal input to the stability-control system, the modification being a reduction of the signalled steering-angle relative to the actual steering angle required of the vehicle before stretching according to comparison between the steering angle required respectively of the motor vehicle before stretching and of the stretched motor vehicle, or of typically-equivalent versions of one or both of such vehicles, in execution of the same turning manoeuvres as one another.

A motor vehicle that has been stretched requires a greater angular movement of the steering wheel for turning than is required with the motor vehicle before the stretching, in order to execute the same diameter turning circle. It has been found in accordance with the present invention that an acceptable and expected working envelope for a stretched vehicle can be achieved if the stability-control system of the motor vehicle existing before the stretching, is supplied with an appropriately reduced representation of the steering angle of the stretched vehicle.

The reduction required may be derived in accordance with a ratio between the actual steering angles required for the unstretched and stretched motor vehicles, or of their typically-equivalent versions of one or both of them, in the execution of a plurality of same-diameter turning circles. Three circles of the same diameter executed by each motor vehicle may be sufficient, with the required ratio derived by averaging the results. More particularly, the three circles in this regard may be, for example, at the individual diameters achieved by the unstretched motor vehicle, or its typically-equivalent version, when at one-quarter, one-half and three-quarters lock.

It has been found that adapting the operation of the stability-control system of a motor vehicle, as provided for in the method and motor vehicle of the invention specified above is fully effective in itself for the stability-control system to function appropriately in the stretched motor vehicle, apart possibly from the need to refit the yaw and lateral acceleration sensor of the motor vehicle to a position in the stretched vehicle as close as practicable to its original relationship with the centre of gravity and wheel-base before it was stretched.

The reduction of the signalled steering angle may be derived via reduction gearing coupled to a steering-input shaft of the motor vehicle, and a steering angle sensor may supply a signal in accordance with the output of the reduction gearing to the stability-control system. As an alternative, a steering-angle sensor for deriving a signal in accordance with steering angle of the motor vehicle may be coupled to the stability-control system of the motor vehicle via an electronic convertor for supplying the derived signal to the stability-control system after conversion of the signal to represent the reduced steering angle.

Embodiments of the present invention will now be described by way of example, with reference to the accompanying drawings, in which:
Figure 1 is representative schematically of part of a known form of electronic control and instrumentation installation of a motor vehicle in the absence of stretching; and
Figures 2 to 5 are each representative schematically of the same part of the electronic control and instrumentation installation of the vehicle represented in Figure 1, when adapted to incorporate modification according to the present invention in the stretched motor vehicle.

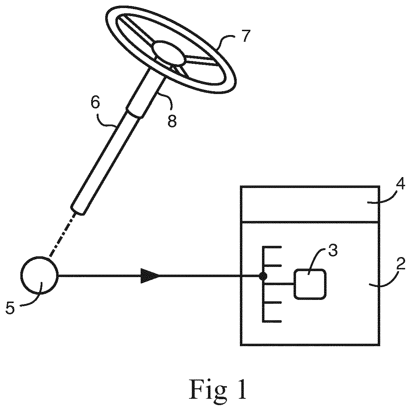

The electronic control and instrumentation system 1 partly represented in Figure 1, which may be that of a production or other unstretched motor vehicle, includes a stability-control system 2 that incorporates an anti-lock braking module 3. The stability-control system is supplied within the installation 1 with signals from a multiplicity of sensors that are shown schematically in Figure 1 as though grouped together as a unit 4. The signals supplied from the unit 4 are representative *inter alia* of the speeds of individual wheels of the vehicle, of the setting of the drive selector of the vehicle, and of yaw rate and lateral acceleration of the vehicle. But more especially in the present context, the installation 1 includes a steering-angle sensor 5 that is coupled to the steering shaft 6 of the steering wheel 7, within the steering column 8 of the vehicle.

The steering-angle sensor 5 is shown schematically as located at the remote end of the shaft 6 from the steering wheel 7, whereas it may in fact be located just below the steering wheel 7. In the control and instrumentation installation 1 of the production or other motor vehicle, the signal representative of the steering angle manifested in the shaft 6, is supplied to the stability-control system 2, and specifically to the anti-lock braking module 3 of the stability-control system 2.

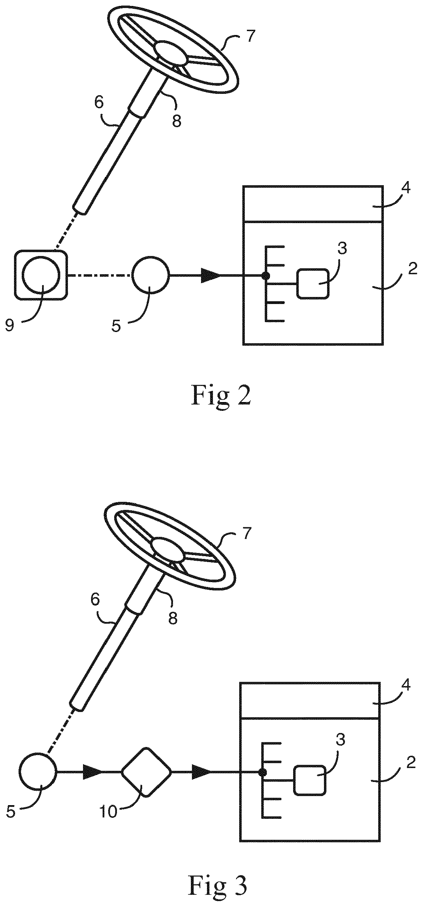

It has been found that if the motor vehicle is stretched the resulting change in its dynamics leads to malfunctioning of its stability-control system 2 with possibly dangerous consequences, unless the existing electronic control and instrumentation installation 1 of the vehicle is suitably adapted to the change. Four examples of suitable adaptation according to the present invention of the electronic control and instrumentation installation 1 of Figure 1, are illustrated in Figures 2 to 5, and will now be described.

Referring to Figure 2, the steering-angle sensor 5 in this adaptation is disconnected from the steering shaft 6, and is instead driven from the shaft 6 via reduction gearing of a gearbox 9. In this way, the sensor 5 supplies a signal to the anti-braking module 3 of the stability-control system 2 representative of the steering angle as reduced from the actual angle in accordance with the reduction-ratio of the gearbox 9.

The gearbox 9 is preferably of a design that allows it to be installed sandwiched into the assembly of the steering column 8, without change of external appearance of the column 8. The reduction-ratio required is determined by firstly executing three circles of the motor vehicle before it is stretched, one at quarter lock, a second at half lock and a third at three-quarters lock; the steering angle required in execution of each of the three circles is noted. The three steering angles required of the stretched motor vehicle in order to execute circles of the same diameters respectively as the circles with the unstretched motor vehicle, are compared with the steering angles noted for the unstretched motor vehicle so as to derive in relation to each of the three circle-diameters the ratio between the steering angles required of the two vehicles. The reduction ratio required of the gearbox 9 is derived as an average of these three ratios.

In the adaptation illustrated in Figure 3, the steering-angle sensor 5 remains coupled to the shaft 6 so as to derive a signal representative of the actual steering angle. This signal is supplied to the anti-lock braking module 3 of the stability-control system 2 after a conversion carried out by an electronic convertor unit 10. The convertor unit 10 converts the signal representative of the actual steering angle received from the sensor 5 to a signal representative of the actual steering angle reduced in accordance with a ratio derived as described above for the gearbox 9, from turning circles executed by the motor vehicle before and after stretching. The converted signal output signal of the unit 10 is supplied to the module 3 of the stability-control system 2.

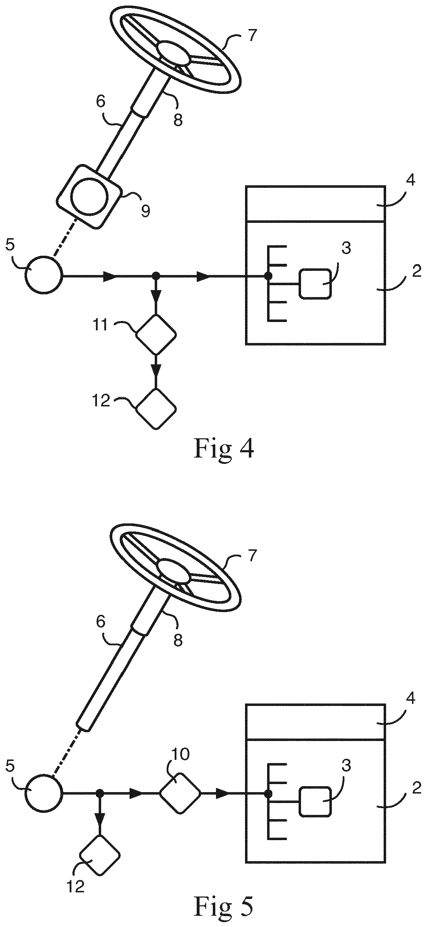

The adaptations illustrated and described above with reference to Figures 2 and 3 can be used in circumstances where the vehicle to be stretched has hydraulic power steering. However, where the vehicle has electric power steering, there can be circumstances in which it is necessary for correct operation of that system for representation of the actual steering angle, rather than of a modified form, to be fed-back into the steering system as confirmation that the system is operating in accordance with the angle demanded by the steering wheel 7. The adaptations illustrated in Figures 4 and 5 (which correspond largely to the adaptations of Figures 2 and 3 respectively) may be used in these circumstances.

Referring to Figure 4, the reduction gearbox 9 is shown in this case directly connected to the shaft 6 for driving the steering-angle sensor 5 according to the appropriate reduction ratio required for supply of signal to the anti-lock braking module 3. That same signal is supplied via an electronic unit 11 that is operative according to the inverse of the applicable reduction ratio to derive from it the feed-back signal required by the electric power steering system, namely, a signal representative of the actual angle of the steering wheel 7. This feed-back signal is supplied from the unit 11 to an electronic module 12 of the electric steering system.

In the adaptation illustrated in Figure 5, the signal derived by the shaft-angle sensor 5 driven by the shaft 6 is representative of the actual shaft-angle and can therefore be supplied directly as feedback to the unit 12, as well as via the convertor unit 10 to the anti-lock braking module 3.

The adaptations of the control and instrumentation installation 1 that are illustrated and described above with reference to Figures 2 to 5, are effective to overcome the malfunctioning of the stability-control system 2 that would otherwise result from stretching the motor vehicle. The only ther change normally required in the stretched motor vehicle is re-location of its yaw and lateral acceleration sensor to be in as close a relationship with the centre of gravity and the wheel-base as applicable in the unstretched motor vehicle.

As indicated above, the reduction ratio of the output of the steering-angle sensor required when a motor vehicle is stretched can be determined by executing typically three turning circles with it in the unstretched form over the range of its steering lock, for example at quarter, half and three-quarters lock, and then executing turning circles of the same diameters with the stretched vehicle before there has been any modification of drive to the steering angle sensor or output from that sensor. Comparison of the outputs of the steering angle sensor in the execution of the three circles before and after the motor vehicle has been stretched, reveals an appropriate measure of the reduction ratio to be applied to the representation of the steering angle of the stretched motor vehicle in its input to the stability-control system.

It has been found that the described method is very effective for both medium and large saloons of production motor vehicles when stretched by up to 1.2 metres.

By way of example, the following table shows the results achieved for a production saloon motor vehicle before and after it has been stretched, in relation to three turning circles executed by the production motor vehicle and stretched vehicle respectively.

| Turning Lock of Production Motor Vehicle | Steering Angle of Production Motor Vehicle | Resultant Turning Circle Diameter | Steering Angle of Stretched Motor Vehicle |
|---|---|---|---|
| 3/4 | 320 degrees | 23 metres | 253 degrees |
| 1/2 | 218 degrees | 35 metres | 163 degrees |
| 1/4 | 116 degrees | 71 metres | 77 degrees |

An average derived by the total of the steering angles of the stretched vehicle (493 degrees) divided by the total of the steering angles of the production motor vehicle (654 degrees), namely 0.75, provides the ratio by which the steering angle of the stretched motor vehicle is to be reduced to 'normalise' it for input to the retained stability-control system of the production motor vehicle when the vehicle is stretched. Correct operation of the stability-control system is not tightly dependent on the reduction ratio used and there is normally a reasonable tolerance range available for it.

Because there are differences between the control and instrumentation systems of different production motor vehicles, and there may be differences in weight and centre of gravity between their stretch-conversions, it is considered essential to undertake full electronic recording and analysis to confirm in each case that an acceptable working envelope has been created for stability control and safety, by means of severe track testing of both the production and stretched motor vehicles to ensure that there is equal or better controlled stability, that driver-inputs are overridden when necessary, and instrument warnings are displayed only where properly applicable.

The existence of an electronic convertor unit 10 in each of the adaptations of Figures 3 and 5 has advantage for practical fault-finding in the stretched motor vehicle, since such a unit provides a convenient facility for diagnostic purposes in confirming proper operations.

## Claims

1. A method of adapting the operation of the stability-control system (2) of a motor vehicle to function appropriately in that motor vehicle, **characterised in that** the method operative in the motor vehicle when stretched comprises the steps of modifying the steering-angle of the vehicle as this is signalled to the stability-control system (2), the modification being a reduction of the signalled steering-angle relative to the actual steering angle according to comparison between the steering angle required respectively of the motor vehicle before stretching and of the stretched motor vehicle, or of typically-equivalent versions of one or both of such vehicles, in execution of the same turning manoeuvres as one another.

2. The method according to claim 1 wherein the modified steering-angle is signalled to an anti-lock braking module (3) of the stability-control system (2).

3. The method according to claim 1 or claim 2 wherein the reduction of the signalled steering angle is derived via reduction gearing (9) coupled to a steering-input shaft (6) of the motor vehicle.

4. The method according to claim 3 wherein a steering angle sensor (5) supplies a signal in accordance with the output of the reduction gearing (9) to the stability-control system (2).

5. The method according to claim 1 or claim 2 wherein a steering-angle sensor (5) for deriving a signal in accordance with steering angle of the motor vehicle is coupled to the stability-control system (2) of the motor vehicle via an electronic convertor (10) which supplies the derived signal to the stability-control system (2) after conversion of the signal to represent the reduced steering angle.

6. The method according to any one of claims 1 to 5 wherein the reduction of the signalled steering angle is derived in accordance with a ratio derived from comparison between the actual steering angles required of the motor vehicle before and after stretching, or of typically-equivalent versions of one or both of these vehicles, in the execution of same-diameter turning circles.

7. The method according to claim 6 wherein a series of three or more circles of the same diameter are executed before and after stretching, and the reduction ratio is derived according to the total of the steering angles required in execution of the series of three or more circles before stretching, divided by the total of the steering angles required in execution of the same series after stretching.

8. The method according to any one of claims 1 to 7 wherein yaw and lateral acceleration sensing apparatus of the motor vehicle is re-positioned in the stretched motor vehicle relative to the centre of gravity and wheel-base of the stretched motor vehicle.

9. A motor vehicle that has been stretched and includes a stability-control system (2) that is adapted to operate according to the method of any one of claims 1 to 8.

10. A motor vehicle that has been stretched **characterised in that** the stretched motor vehicle includes the stability-control system (2) of the motor vehicle before it was stretched, and is adapted to modify the steering-angle signal input to the stability-control system (2), the modification being a reduction of the signalled steering-angle relative to the actual steering angle required of the vehicle before stretching according to comparison between the steering angle required respectively of the motor vehicle before stretching and of the stretched motor vehicle, or of typically-equivalent versions of one or both of such vehicles, in execution of the same turning manoeuvres as one another.

11. The motor vehicle according to claim 10 wherein the modified steering-angle is signalled to an anti-lock braking module (3) of the stability-control system (2).

12. The motor vehicle according to claim 10 or claim 11 wherein the reduction of the signalled steering angle is derived via reduction gearing (9) coupled to a steering-input shaft (6) of the motor vehicle.

13. The motor vehicle according to claim 12 wherein a steering angle sensor (5) supplies a signal in accordance with the output of the reduction gearing (9) to the stability-control system (2).

14. The motor vehicle according to claim 10 or claim 11 wherein a steering-angle sensor (5) for deriving a signal in accordance with steering angle of the motor vehicle is coupled to the stability-control system (2) of the motor vehicle via an electronic convertor (10) for supplying the derived signal to the stability-control system (2) after conversion of the signal to represent the reduced steering angle.

15. The motor vehicle according to any one of claims 10 to 14 wherein the reduction of the signalled steering angle is derived in accordance with a ratio derived from comparison between the actual steering angles required of the motor vehicle before and after stretching, or of typically-equivalent versions of one or both of such vehicles, in the execution of the same-diameter turning circles as one another.

## Patentansprüche

1. Verfahren zum Anpassen des Betriebs des Stabilitätssteuerungssystems (2) eines Kraftfahrzeugs, um in diesem Kraftfahrzeug ordnungsgemäß zu funktionieren, **dadurch gekennzeichnet, dass** das Verfahren, das im Kraftfahrzeug wirksam ist, wenn es gestreckt wird, die Schritte des Änderns des Lenkwinkels des Fahrzeugs umfasst, wenn dies dem Stabilitätssteuerungssystem (2) signalisiert wird, wobei die Änderung eine Reduzierung des signalisierten Lenkwinkels gegenüber dem tatsächlichen Lenkwinkel gemäß dem Vergleich zwischen dem jeweils erforderlichen Lenkwinkel des Kraftfahrzeugs vor dem Strecken und des gestreckten Kraftfahrzeugs oder von typischerweise gleichwertigen Versionen eines oder beider solcher Fahrzeuge bei der Ausführung der gleichen Wendemanöver wie die anderen ist.

2. Verfahren nach Anspruch 1, wobei der geänderte Lenkwinkel an ein Antiblockierbremsmodul (3) des Stabilitätssteuerungssystems (2) signalisiert wird.

3. Verfahren nach Anspruch 1 oder Anspruch 2, wobei die Reduzierung des signalisierten Lenkwinkels über ein Untersetzungsgetriebe (9) abgeleitet wird, das mit einer Lenkeingangswelle (6) des Kraftfahrzeugs gekoppelt ist.

4. Verfahren nach Anspruch 3, wobei ein Lenkwinkelsensor (5) ein Signal gemäß dem Ausgang des Untersetzungsgetriebes (9) an das Stabilitätssteuerungssystem (2) sendet.

5. Verfahren nach Anspruch 1 oder Anspruch 2, wobei ein Lenkwinkelsensor (5) zum Ableiten eines Signals gemäß dem Lenkwinkel des Kraftfahrzeugs über einen elektronischen Wandler (10) mit dem Stabilitätssteuerungssystem (2) des Kraftfahrzeugs gekoppelt wird, der das abgeleitete Signal nach der Umwandlung des Signals in den reduzierten Lenkwinkel an das Stabilitätssteuerungssystem (2) sendet.

6. Verfahren nach einem der Ansprüche 1 bis 5, wobei die Reduzierung des signalisierten Lenkwinkels gemäß einem Verhältnis abgeleitet wird, das sich aus dem Vergleich zwischen den tatsächlichen Lenkwinkeln, die das Kraftfahrzeug vor und nach dem Strecken benötigt, oder typischerweise gleichwertiger Versionen eines oder beider dieser Fahrzeuge bei der Ausführung von Wendekreisen des gleichen Durchmessers ergibt.

7. Verfahren nach Anspruch 6, wobei eine Reihe von drei oder mehr Kreisen mit gleichem Durchmesser vor und nach dem Strecken ausgeführt wird und das Untersetzungsverhältnis gemäß der Summe der Lenkwinkel abgeleitet wird, die bei der Ausführung der Reihe von drei oder mehr Kreisen vor dem Strecken erforderlich sind, dividiert durch die Summe der Lenkwinkel, die bei der Ausführung der gleichen Reihe nach dem Strecken erforderlich sind.

8. Verfahren nach einem der Ansprüche 1 bis 7, wobei die Gier- und Querbeschleunigungserfassungsvorrichtung des Kraftfahrzeugs in dem gestreckten Kraftfahrzeug in Bezug auf den Schwerpunkt und den Radstand des gestreckten Kraftfahrzeugs neu positioniert wird.

9. Kraftfahrzeug, das gestreckt wurde und ein Stabilitätssteuerungssystem (2) beinhaltet, das angepasst ist, um gemäß dem Verfahren nach einem der Ansprüche 1 bis 8 zu arbeiten.

10. Kraftfahrzeug, das gestreckt wurde, **dadurch gekennzeichnet, dass** das gestreckte Kraftfahrzeug das Stabilitätssteuerungssystem (2) des Kraftfahrzeugs beinhaltet, bevor es gestreckt wurde, und angepasst ist, um den Lenkwinkelsignaleingang zum Stabilitätssteuerungssystem (2) zu ändern, wobei die Änderung eine Reduzierung des signalisierten Lenkwinkels gegenüber dem tatsächlichen Lenkwinkel des Fahrzeugs vor dem Strecken gemäß dem Vergleich zwischen dem jeweils erforderlichen Lenkwinkel des Kraftfahrzeugs vor dem Strecken und des gestreckten Kraftfahrzeugs oder von typischerweise gleichwertigen Versionen eines oder beider dieser Fahrzeuge bei der Ausführung der gleichen Wendemanöver wie die anderen ist.

11. Kraftfahrzeug nach Anspruch 10, wobei der geänderte Lenkwinkel an ein Antiblockierbremsmodul (3) des Stabilitätssteuerungssystems (2) signalisiert wird.

12. Kraftfahrzeug nach Anspruch 10 oder Anspruch 11, wobei die Reduzierung des signalisierten Lenkwinkels über ein Untersetzungsgetriebe (9) abgeleitet wird, das mit einer Lenkeingangswelle (6) des Kraftfahrzeugs gekoppelt ist.

13. Kraftfahrzeug nach Anspruch 12, wobei ein Lenkwinkelsensor (5) ein Signal gemäß dem Ausgang des Untersetzungsgetriebes (9) an das Stabilitätssteuerungssystem (2) sendet.

14. Kraftfahrzeug nach Anspruch 10 oder Anspruch 11, wobei ein Lenkwinkelsensor (5) zum Ableiten eines Signals gemäß dem Lenkwinkel des Kraftfahrzeugs über einen elektronischen Wandler (10) mit dem Stabilitätssteuerungssystem (2) des Kraftfahrzeugs zum Senden des abgeleiteten Signals nach der Umwandlung des Signals in den reduzierten Lenkwinkel an das Stabilitätssteuerungssystem (2) gekoppelt wird.

15. Kraftfahrzeug nach einem der Ansprüche 10 bis 14, wobei die Reduzierung des signalisierten Lenkwinkels gemäß einem Verhältnis abgeleitet wird, das sich aus dem Vergleich zwischen den tatsächlichen Lenkwinkeln, die das Kraftfahrzeug vor und nach dem Strecken benötigt, oder typischerweise gleichwertiger Versionen eines oder beider solcher Fahrzeuge bei der Ausführung von Wendekreisen des gleichen Durchmessers wie die anderen.

## Revendications

1. Procédé d'adaptation du fonctionnement du dispositif de contrôle de la stabilité (2) d'un véhicule à moteur pour qu'il fonctionne convenablement dans ce véhicule à moteur, **caractérisé en ce que** le procédé opérant dans le véhicule à moteur quand il est allongé comprend les étapes consistant à modifier l'angle de braquage du véhicule lorsque ceci est signalé au dispositif de contrôle de la stabilité (2), la modification étant une réduction de l'angle de braquage signalé par rapport à l'angle de braquage réel en fonction de la comparaison entre les angles de braquage requis respectivement du véhicule à moteur avant allongement et du véhicule à moteur allongé, ou de versions typiquement équivalentes d'un de ces véhicules ou des deux, en exécution des mêmes manoeuvres de braquage pour l'un comme pour l'autre.

2. Procédé selon la revendication 1, dans lequel l'angle de braquage modifié est signalé à un module d'antiblocage de sécurité (3) du dispositif de contrôle de la stabilité (2).

3. Procédé selon la revendication 1 ou 2, dans lequel la réduction de l'angle de braquage signalé est obtenue par l'intermédiaire d'un engrenage réducteur (9) accouplé à l'arbre d'entrée de direction (6) du véhicule à moteur.

4. Procédé selon la revendication 3, dans lequel un capteur (5) d'angle de braquage fournit un signal conformément à la sortie de l'engrenage réducteur (9) vers le système de contrôle de la stabilité (2).

5. Procédé selon la revendication 1 ou 2, dans lequel un capteur (5) d'angle de braquage pour obtenir un signal conformément à l'angle de braquage du véhicule à moteur est accouplé au système de contrôle de la stabilité (2) du véhicule à moteur par l'intermédiaire d'un convertisseur électronique de puissance (10) qui fournit le signal dérivé au système de contrôle de la stabilité (2) après conversion du signal pour représenter l'angle de braquage réduit.

6. Procédé selon l'une quelconque des revendications 1 à 5, dans lequel la réduction de l'angle de braquage signalé est obtenue conformément à un rapport dérivé de la comparaison entre les angles de braquage réels requis du véhicule à moteur avant et après allongement, ou de versions typiquement équivalentes d'un de ces véhicules ou des deux, dans l'exécution de cercles de braquage de même diamètre.

7. Procédé selon la revendication 6, dans lequel une série de trois cercles ou plus de même diamètre sont exécutés avant et après allongement, et le rapport de réduction est calculé en divisant le total des angles de braquage requis dans l'exécution de la série de trois cercles ou plus avant allongement par le total des angles de braquage requis dans l'exécution de la même série après allongement.

8. Procédé selon l'une quelconque des revendications 1 à 7, dans lequel un appareil de détection d'attitude en lacet et d'accélération latérale du véhicule à moteur est replacé dans le véhicule à moteur allongé par rapport au centre de gravité et d'empattement du véhicule à moteur allongé.

9. Véhicule à moteur qui a été allongé et qui comprend un système de contrôle de la stabilité (2) conçu pour fonctionner selon le procédé selon l'une quelconque des revendications 1 à 8.

10. Véhicule à moteur qui a été allongé, **caractérisé en ce que** le véhicule à moteur allongé comprend le système de contrôle de la stabilité (2) du véhicule à moteur avant allongement et est apte à modifier l'entrée du signal d'angle de braquage dans le système de contrôle de la stabilité (2), la modification étant une réduction de l'angle de braquage signalé par rapport à l'angle de braquage réel requis du véhicule avant allongement en fonction de la comparaison entre les angles de braquage requis respectivement du véhicule à moteur avant allongement et du véhicule à moteur allongé, ou de versions typiquement équivalentes d'un de ces véhicules ou des deux, en exécution des mêmes manoeuvres de braquage pour l'un comme pour l'autre.

11. Véhicule à moteur selon la revendication 10, dans lequel l'angle de braquage modifié est signalé à un module d'antiblocage de sécurité (3) du dispositif de contrôle de la stabilité (2).

12. Véhicule à moteur selon la revendication 10 ou 11, dans lequel la réduction de l'angle de braquage signalé est obtenue par l'intermédiaire d'un engrenage réducteur (9) accouplé à l'arbre d'entrée de direction (6) du véhicule à moteur.

13. Véhicule à moteur selon la revendication 12, dans lequel un capteur (5) d'angle de braquage fournit un signal conformément à la sortie de l'engrenage réducteur (9) vers le système de contrôle de la stabilité (2).

14. Véhicule à moteur selon la revendication 10 ou 11, dans lequel un capteur (5) d'angle de braquage pour obtenir un signal conformément à l'angle de braquage du véhicule à moteur est accouplé au système de contrôle de la stabilité (2) du véhicule à moteur par l'intermédiaire d'un convertisseur électronique de puissance (10) pour fournir le signal dérivé au système de contrôle de la stabilité (2) après conversion du signal pour représenter l'angle de braquage réduit.

15. Véhicule à moteur selon l'une quelconque des revendications 10 à 14, dans lequel la réduction de l'angle de braquage signalé est obtenue conformément à un rapport dérivé de la comparaison entre les angles de braquage réels requis du véhicule à moteur avant et après allongement, ou de versions typiquement équivalentes d'un de ces véhicules ou des deux, dans l'exécution de cercles de braquage du même diamètre pour l'un comme pour l'autre.
